# EUROPEAN PATENT SPECIFICATION

(11) **EP 1 400 495 B1**
(45) Date of publication and mention of the grant of the patent: **03.01.2007**
(21) Application number: 03021150.2
(22) Date of filing: 22.09.2003
(51) Int. Cl.: C03B 27/044, C03B 27/04

(54) **Apparatus and process for air-cooling and tempering a glass sheet**
Vorrichtung und Verfahren zur Luftkühlung und zur Vorspannung einer Glasscheibe
Appareil et procédé pour refroidir à l'air et tremper une feuille de verre

(30) Priority: 20.09.2002 JP 2002275149
(43) Date of publication of application: 24.03.2004
(73) Proprietor: Asahi Glass Company, Limited, Chiyoda-ku, Tokyo 100-8405 (JP)
(72) Inventor: Nemugaki, Yoichi, Asahi Glass Co.Ltd, Chita-gun Aichi (JP)
(74) Representative: Müller-Boré & Partner Patentanwälte

(56) References cited:
- EP-A- 1 114 800
- FR-A- 1 450 421
- FR-A- 1 519 292
- FR-A- 2 286 798
- US-A- 3 881 906
- PATENT ABSTRACTS OF JAPAN vol. 1999, no. 10, 31 August 1999 (1999-08-31) -& JP 11 139839 A (ASAHI GLASS CO LTD), 25 May 1999 (1999-05-25)

## Description

The present invention relates to an apparatus and a process for air-cooling and tempering a glass sheet, in particular, relates to an apparatus and a process for air-cooling and tempering a glass sheet which cools and tempers a glass sheet by blowing cooling air to upper and lower surfaces of a curved glass sheet bent in a high temperature state.

An apparatus for producing a glass sheet for automobile windows by heating a glass sheet to a temperature close to the softening point in a furnace, bending it in a forming zone and quenching it in an air-cooling/tempering apparatus, has been known. The air-cooling/tempering apparatus comprises a conveying apparatus for conveying a bent glass sheet, and air blowing members disposed above and under the conveying apparatus so as to sandwich the conveying apparatus. According to the conventional air-cooling/tempering apparatus, when the whole of a glass sheet conveyed by the conveying apparatus enters in an air-blowing area in which air is blown from upper and lower air blowing members, the conveying apparatus is stopped momentarily, and cooling air is blown from a plurality of air-nozzles of the upper and lower air-blowing members all at once for a predetermined duration to cool and temper the glass sheet. Thereafter, the conveying apparatus starts again to convey the air-cooled and tempered glass sheet to the next process (for example, refer to JP-A-2000-281369, p. 3 and Fig. 1).

The apparatus for producing an automobile window glass comprising a furnace, a forming zone and an air-cooling/tempering apparatus, can improve the productivity by air-cooling and tempering a glass sheet while it is continuously conveyed and by increasing the forming speed.

However, if the forming speed is increased in the forming zone, glass sheets are conveyed into the air-cooling/tempering apparatus with a short conveying interval. In the case of the conventional air-cooling/tempering apparatus, if the glass sheets are cooled and tempered as they are continuously conveyed under such condition, a next glass sheet located upstream a glass sheet being cooled and tempered will enter into the air-blowing area while the cooling air is blown. Therefore, there occurs a time lag between the start of blowing air to the front end of the glass sheet and the start of blowing air to the rear end, which causes uneven cooling of the glass sheet.

Therefore, in the conventional air-cooling/tempering apparatus, there is a disadvantage that the conveying apparatus has to be stopped momentarily when a glass sheet is cooled and tempered, namely, the conventional air-cooling/tempering apparatus can not cool and temper a glass sheet while it is continuously conveyed and accordingly, the productivity can not be increased.

EP-A-1 114 800 discloses an apparatus for air-cooling and tempering a glass sheet, comprising conveying means to convey a glass sheet, a plurality of upper and lower blowing members and a plurality of air-supply boxes for controlling blow and stop operations of cooling air from each of the blowing members and an air-supply source connected to the plurality of air-supply boxes.

The present invention has been made under these circumstances, and it is an object of the present invention to provide an air-cooling/tempering apparatus and a process for air-cooling and tempering a glass sheet without adversely affecting the quality of the glass sheet while it is continuously conveyed.

The present invention provides, in order to achieve the above object, an apparatus for air-cooling and tempering a glass sheet, comprising:
a conveying means installed to be operable from a forming zone to a cooling area and to convey a glass sheet in a high temperature state,
a plurality of upper blowing members provided in parallel along a conveying direction of glass sheet above the conveying means in the cooling area,
a plurality of lower blowing members provided in parallel along a conveying direction of glass sheet under the conveying means in the cooling area,
a plurality of air-supply boxes provided in each of the upper and lower blowing members for controlling blow/stop operations of cooling air from each of the blowing members, and
an air-supply source connected to these air-supply boxes,
wherein each of the air-supply boxes comprises a cylindrical damper having a perforated hole provided at its side, a casing for rotatably accommodating the damper and for forming an air channel only when the damper is at a predetermined rotational position, and a slide bearing provided in a space between the damper and the casing, and wherein the air-supply-boxes are configured such that, by adjusting the rotational position of the damper, the cooling air supplied from the air-supply source can be supplied to the upper and/or lower blowing members through said air channels.

The present invention further provides the apparatus for air-cooling and tempering a glass sheet, further comprising a control means for controlling the rotational position of the damper according to claim 2.

It is preferred that an upper and/or lower blowing member further comprises an air-nozzle swingable in the conveying direction of glass sheet.

Further, it is preferred that the conveying means is a conveyer comprising a plurality of rollers disposed in parallel along the conveying direction of glass sheet.

Further, it is preferred that the rollers move up and down according to the position of a glass sheet so that a curved glass sheet can be conveyed.

Further, it is preferred that a plurality of dampers are connected via an Oldham's coupling.

Further, it is preferred that the glass sheet is for a window glass of automobiles.

The present invention further provides a process for air-cooling and tempering a glass sheet according to claim 8. Further developments are defined in the dependent sub claims.

In the accompanying drawings:
Fig. 1 is a perspective view showing the structure of a bending apparatus for a glass sheet in which an air-cooling/tempering apparatus according to the present invention is incorporated.
Figs. 2(a) to 2(e) are diagrams illustrating a bending operation of a glass sheet by a roller conveyor.
Fig. 3 is a diagram showing the structure of a rotation-driving means and vertical movement means of a roller.
Fig. 4 is a cross-sectional view showing the structure of air nozzles of blowing members of the air-cooling/tempering apparatus.
Fig. 5 is a view showing the structure of a rotation mechanism and a vertical movement mechanism of a roller of the air-cooling/tempering apparatus.
Fig. 6 is a view showing the structure of a vertical movement mechanism of a blowing member of the air-cooling/tempering apparatus.
Fig. 7 is a perspective exploded view showing the structure of a damper of the air-cooling/tempering apparatus.
Fig. 8 is a side view of the damper shown in Fig. 7.
Figs. 9(a) and 9(b) are enlarged cross-sectional views showing a substantial part of the damper shown in Fig. 8.
Figs. 10(a) and 10(b) are diagrams illustrating the operation of the damper shown in Fig. 7.
Fig. 11 is a perspective view showing an embodiment wherein two dampers are connected via a coupling.
Figs. 12 to 16 are diagrams illustrating the operation of blow/stop operations of cool-air from air nozzles by open/close operations of a damper.
Now, the preferred embodiments of an air-cooling/tempering apparatus for a glass sheet according to the present invention will be described in detail with reference to the attached drawings.

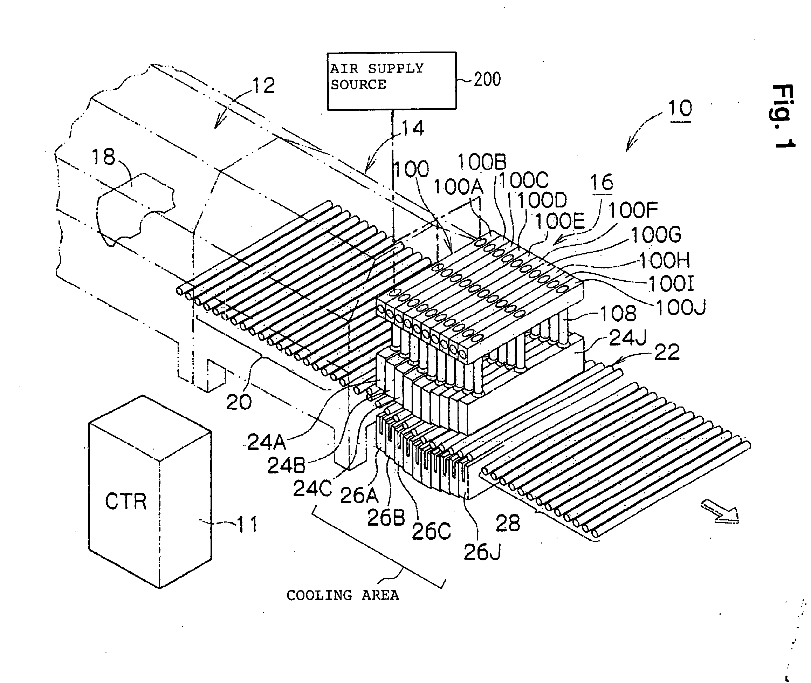

Fig. 1 is a perspective view showing the structure of a bending apparatus for a glass sheet in which the air-cooling/tempering apparatus according to this embodiment is incorporated.

First, the flow of a glass sheet in the bending process will be described with reference to the figure. A glass sheet 18 before the bending process is positioned at the entrance of a furnace 12, introduced into the furnace 12 by a roller conveyor for conveying, not shown, and heated up to a predetermined bending temperature (about from 600 to 700°C) in a process of being conveyed in the furnace 12.

The glass sheet 18 heated up to the bending temperature, is transferred from the exit of the furnace 12 to a roller conveyor for bending to be conveyed in the forming zone 14. The glass 18 is formed into a shape having a predetermined curvature by an up/down moving operation of the roller conveyor for bending in the process of being conveyed in the forming zone 14.

The curved glass sheet 18 is transferred from the exit of the forming zone 14 to a roller conveyor 22 for air-cooling and tempering (corresponding to the conveying means in Claims). The glass sheet 18 is conveyed by the roller conveyer 22 for air-cooling and tempering into an air-cooling/tempering apparatus 16 to be cooled and tempered.

The glass sheet 18 cooled and tempered is transferred to a transferring roller conveyor 28, and conveyed to an inspection apparatus as a next process, not shown.

As described above, the glass sheet 18 is heated up to a bending temperature in the furnace 12, bent into a predetermined curved shape in the forming zone 14, and thereafter, cooled and tempered by the air-cooling/tempering apparatus 16 in the cooling area. Here, a numeric symbol 11 indicates a controller for controlling the furnace 12, the forming zone 14 and the air-cooling/tempering apparatus 16.

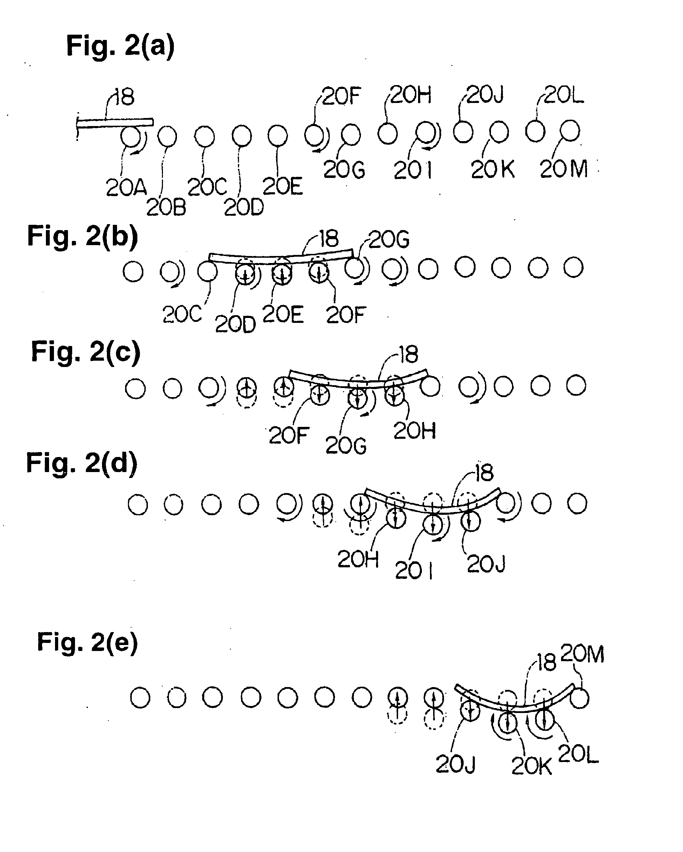

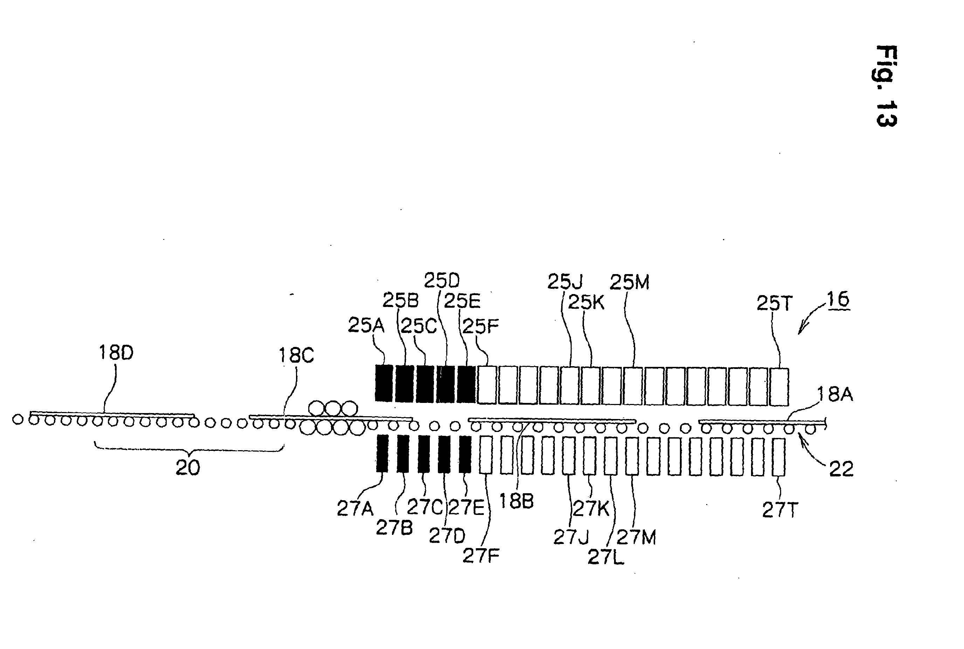

Next, the construction of the forming zone 14 will be described. A roller conveyor 20 for bending shown in Fig. 13 is constituted by a plurality of rollers 20A, 20B, ··· each formed into a straight rod as shown in Fig. 2, and the rollers 20A, 20B, ··· are disposed in parallel with a predetermined interval. The glass sheet 18 is conveyed along a conveying plane formed by the rollers 20A, 20B, ··· by rotations of these rollers 20A, 20B, ···. Further, each of the rollers 20A, 20B, ··· constituting the roller conveyor 20 is independently rotated by a rotation driving means and independently moved in the vertical direction by a vertical driving means.

The structure of the rotation driving means and the vertical driving means installed in the forming zone 14, will be described. Here, since the rotation driving means and the vertically driving means of the rollers 20A, 20B, ···, have each the same structure, only the structures of the rotation driving means and the vertical driving means of a roller 20A will be described, and the description regarding the structures of other rollers 20B, 20C, ···, is omitted.

### Rotation driving means

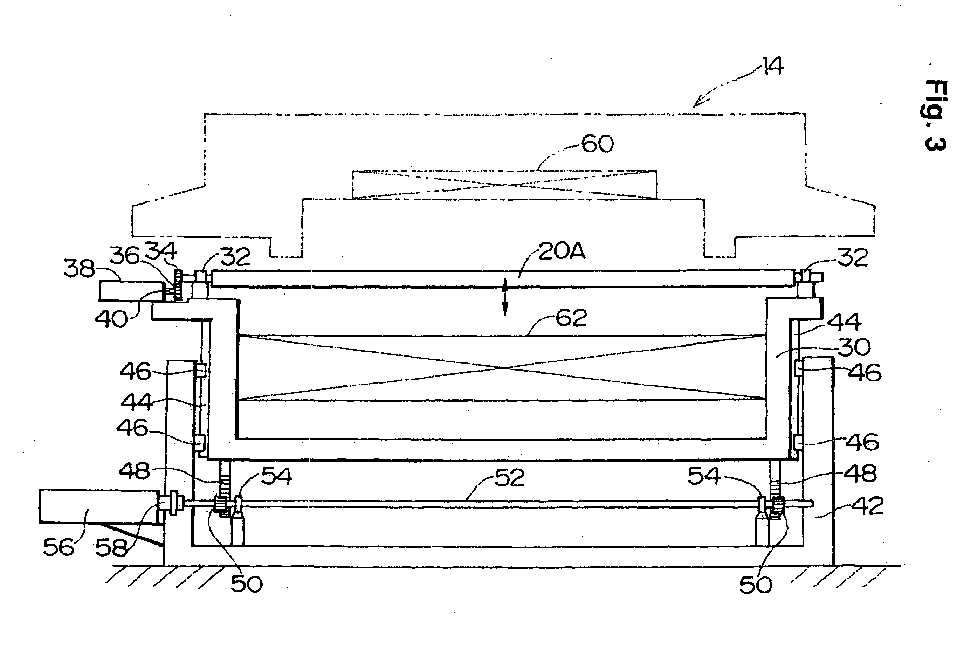

As illustrated in Fig. 3, the roller 20A is rotatably supported at its both ends by bearings 32, 32 mounted on a vertically movable frame 30. Further, to the left end of the roller 20A in Fig. 3, a gear 34 is attached, and the gear 34 is engaged with a gear 36. The gear 36 is connected to a rotational shaft 40 of a servo motor 38 mounted on the vertically movable frame 30. By driving the servo motor 38, the roller 20A is rotated at a predetermined angular speed. This is all about the structure of the rotation driving means.

### Vertical driving means

As illustrated in Fig. 3, the vertically movable flame 30 is supported by a fixed frame 42 so as to be movable up and down. Namely, guide rails 44, 44 are disposed vertically along both sides of the vertically movable frame 30, and the guide rails 44, 44 are engaged with guide blocks 46, 46 fixed to the fixed frame 42. Further, at both ends of a lower portion of the vertically movable frame 30, racks 48, 48 are provided so as to protrude downward therefrom. Pinions 50, 50 are engaged with the racks 48, 48, and the pinions 50, 50 are fixed to a rotational shaft 52. The rotational shaft 52 is supported by the bearings 54, 54 at its both ends, and its left end portion in Fig. 3 is connected to a spindle 58 of a servo motor 56. When the servo motor 56 rotates the rotation shaft 52, the rotational movement is converted to a linear movement by the effect of the pinions 50 and the racks 48. Accordingly, the vertically movable frame 30 is moved up and down. And the roller 20A is moved up and down by the movement of the vertically movable frame 30. That is all about the structure of the elevating means. Here, numeric symbols 60, 62 in Fig. 3 indicate heaters provided in the forming zone 14.

The rotation driving means and the vertical driving means described above, are provided for all of other rollers 20B, 20C, ···. The servo motors 38, 56 for these means are all controlled by a controller 11 in Fig. 1.

When a type of the glass sheet 18 is input from an external input means, the controller 11 prepares angular speed control data and up/down movement control data of the rollers 20A, 20B, ···, which correspond to the curvature of the glass sheet 18 of the type. Then, the controller controls the servo motors 38 based on the angular speed control data prepared, and controls the servo motors 56 based on the up-down movement control data. Namely, the controller 11 carries out multi-axis control of the rollers 20A, 20B, ···, so that the glass sheet 18 is bent to have a desired curvature in the conveying direction during the conveyance by the rollers 20A, 20B, ···.

Bending operation of a glass sheet 18 by a roller conveyer 20 having the above construction, will be described with reference to Figs. 2(a) and 2(e).

In the initial state, all the rollers 20A, 20B, ···, are at the top position as illustrated in Fig. 2(a). And when the conveyance of the glass sheet 18 is started, the rollers 20D to 20F move down as illustrated in Fig. 2(b). Accordingly, the conveying plane defined by the rollers 20D to 20F deforms to have a gentle curved form having a large curvature radius. When the glass sheet 18 passes on the rollers 20D to 20F, the glass sheet 18 bends by its own weight along a conveying plane defined by the rollers 20D to 20F, and is bent in the conveying direction.

Thereafter, when the glass sheet 18 is further conveyed as illustrated in Fig. 2(c), the rollers 20F to 20H move down more deeply than the previous rollers 20D to 20F. Accordingly, a conveying plane defined by the rollers 20F to 20H deforms to have a curved shape having a smaller curvature radius than the previous curved conveying plane. Consequently, when the glass sheet 18 passes on the rollers 20F to 20H, the glass sheet 18 further bends by its own weight along the conveying plane defined by the rollers 20F to 20H, and is bent in the conveying direction.

Thereafter, when the glass sheet 18 is further conveyed as illustrated in Fig. 2(d), the rollers 20H to 20J move down more deeply than the previous rollers 20F to 20H. Accordingly, a conveying plane defined by the rollers 20H to 20J deforms to have a curved shape having a smaller curvature radius than the previous curved plane. Consequently, when the glass sheet 18 passes on the rollers 20H to 20J, the glass sheet 18 further bends by its own weight along the conveying plane defined by the rollers 20H to 20J, and is bent in the conveying direction.

Thereafter, when the glass sheet 18 is conveyed forward as illustrated in Fig. 2(e), the rollers 20J to 20L move down more deeply than the previous rollers 20H to 20J. And a conveying plane defined by the rollers 20J to 20L deforms into a curved shape having the same curvature as the finally obtainable curvature of the glass sheet 18. When the glass sheet 18 passes on the rollers 20J to 20L, it is bent to have the finally obtainable curvature in the conveying direction. Thereafter, the rollers 20M and a succeeding roller move up and down so as to maintain the curved plane having this curvature.

As described above, the glass sheet 18 is bent in the conveying direction by sequentially decreasing the curvature radius of the curved plane defined by the up/down movement of the rollers 20A, 20B, ··· of the roller conveyer 20.

Next, the air-cooling/tempering apparatus 16 in Fig. 1 will be described. The air-cooling/tempering apparatus 16 cools and tempers a glass sheet 18 by blowing cooling air to the top and bottom surfaces of the glass sheet 18 being continuously conveyed by a roller conveyer 22 for air-cooling and tempering. Further, the roller conveyor 22 for air-cooling and tempering has a vertically movable structure like the roller conveyor 20 for bending.

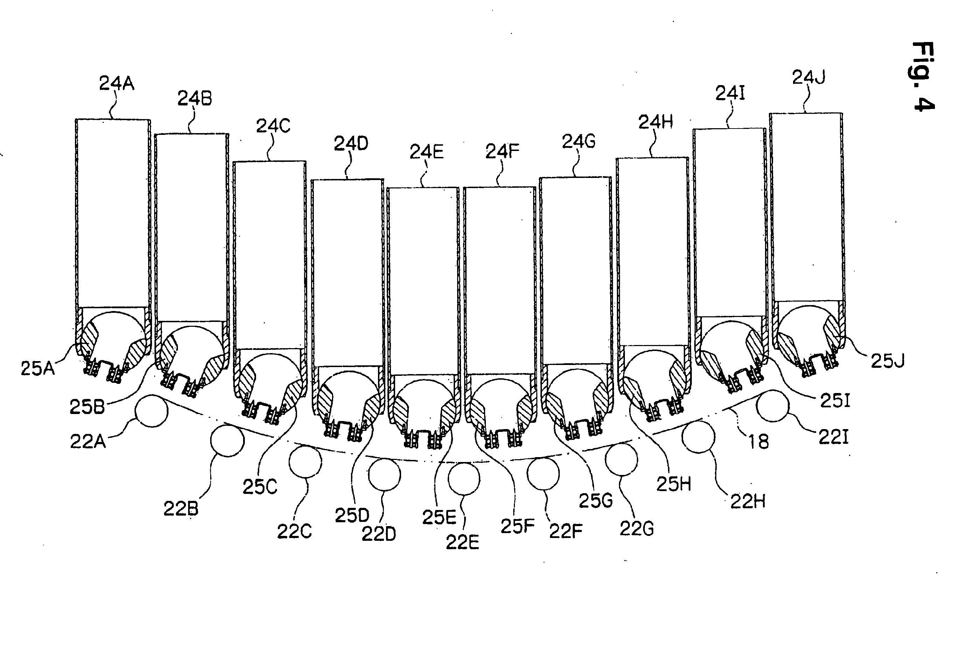

The roller conveyor 22 shown in Fig. 1 is constituted by a plurality of rollers 22A, 22B, ··· each formed in a straight rod as shown in Fig. 4, and the rollers 22A, 22B ··· are disposed in parallel with a predetermined interval. Each of the rollers 22A, 22B, ··· is independently rotated by a rotation driving means, and is independently moved up and down by a vertical driving means.

Next, the structure of the rotation driving means and the vertical driving means will be described. Here, since the rotation driving means and the vertical driving means of the rollers 22A, 22B, ···, have each the same structure, only the structures of the rotation driving means and the vertically movable means of a roller 22A will be described, and the description regarding the structures of other rollers 22B, 22C, ···, is omitted.

### Rotation driving means

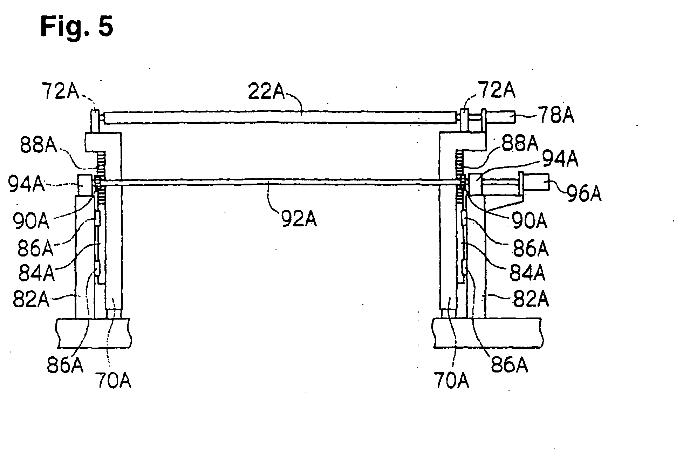

As illustrated in Fig. 5, the roller 22A is rotatably supported at its both ends by bearings 72A, 72A mounted on a pair of vertically movable frames 70A, 70A. Further, to the right end of the roller 22A in Fig. 5, an output shaft of a servo motor 78A is connected. By driving the servo motor 78A, the roller 22A is rotated at a predetermined angular speed. This is all about the structure of the rotation driving means.

### Vertical driving means

A pair of vertically movable flames 70A, 70A are supported by a pair of fixed frames 82A, 82A respectively so as to be movable up and down. Namely, a guide rail 84A is disposed vertically along out side of each of the vertically movable frames 70A, and the guide rail 84A is supported by guide blocks 86A, 86A fixed to inside of the fixed frame 82A so as to be slidable. Further, at outside of the vertically movable frame 70A, racks 88A, 88A are provided, and pinions 90A, 90A are engaged with the racks 88A, 88A. The pinions 90A, 90A are fixed to a rotational shaft 92A, and the rotational shaft 92A is supported by the bearings 94A, 94A at its both ends. And to its right end portion in Fig. 5 is connected to a spindle of a servo motor 96A mounted at the top of one of the fixed frames 82A. When the servo motor 96A rotates the rotation shaft 92A, the rotational movement is converted to a linear movement by the effect of the pinions 90A and the racks 88A. Accordingly, the vertically movable frame 70A is moved up and down, and the roller 22A is thereby moved up and down. That is all about the structure of the elevating means.

The rotation driving means and the vertical driving means described above, are provided for each of all other rollers 22B, 22C, ···. The servo motors 78A, 78B, ···, 96A, 96B, ··· for those means are all controlled by a controller 11 in Fig. 1.

When a type of the glass sheet 18 is input from an external input means, not shown, the controller 11 prepares angular speed control data and up/down movement control data of the rollers 22A, 22B, ···, which correspond to the curvature of the glass sheet 18 of the type. Then, the controller controls the servo motors 78A, 78B, ··· based on the angular speed control data prepared, and controls the servo motors 96A, 96B, ··· based on the up/down movement control data. Namely, the controller 11 carries out multi-axis control of the rollers 22A, 20B, ···, so that the glass sheet 18 bent in the forming zone 14 is conveyed as its shape is maintained.

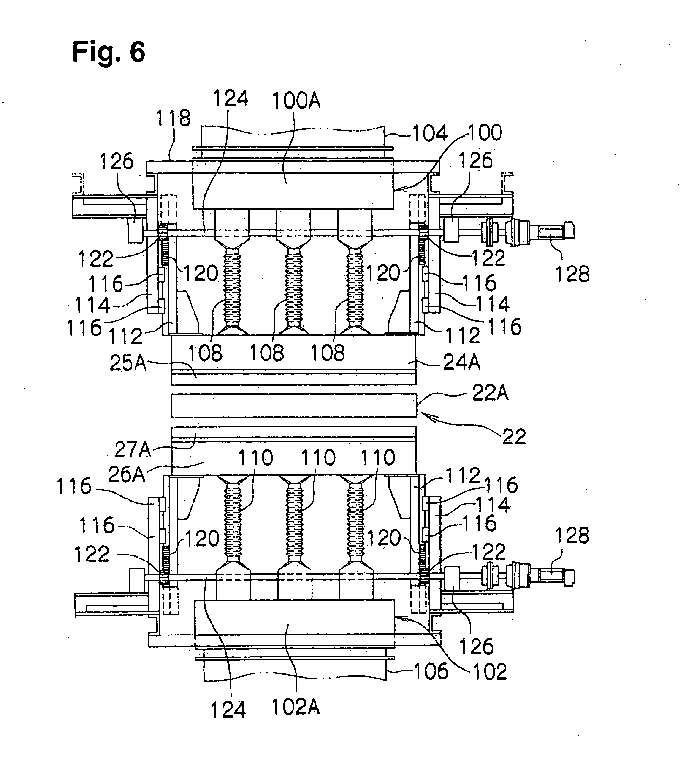

The main body of the air-cooling/tempering apparatus 16 is, as illustrated in Fig. 6, constituted by an upper air-supply box 100 disposed above the roller conveyor 22 and a lower air-supply box 102 disposed below the roller conveyor 22 so that they sandwich the roller conveyor 22.

To the upper air-supply box 100 and the lower air-supply box 102, ducts 104 and 106 are respectively connected, and to these ducts 104 and 106, an air supply source 200 constituted by e.g. a blower is connected. Therefore, cooling air from the air supply source 200 is supplied to the upper air-supply box 100 and the lower air-supply box 102 via ducts 104 and 106.

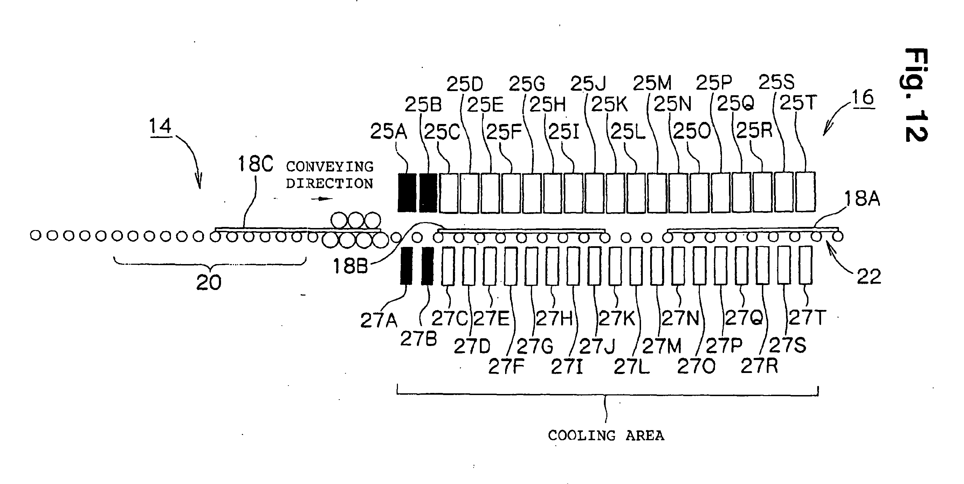

The upper air-supply box 100 is, as illustrated in Fig. 1, divided into air-supply boxes from 100A located most upstream in the conveying path of a glass sheet 18 (refer to Fig. 6) to 100J as tenth air-supply box, the lower air supply box 102 is divided into air-supply boxes 102A, ··· in the same manner (a side of the air-supply box 102 is not shown), and the ducts 104 and 106 are connected to each of the divided boxes. Further, the divided boxes have the respective air nozzles 25A to 25J and 27A to 27J (refer to Fig. 4). Further, the upper air-supply box 100 and the lower air-supply box 102 have, as shown in Fig. 12 to be described later, 20 air nozzles 25A to 25T and 27A to 27T respectively, and among them, air nozzles 25A to 25J and 27A to 27J are disposed on the side of the 10 divided boxes, and the remaining air nozzles 25K to 25T and 27K to 27T are all connected to a 11th large-sized air-supply box, not shown. Here, in Fig. 1, the air-supply box 102, the 11th large-sized air-supply box and the air nozzles 25K to 25T and 27K to 27T are omitted. Here, each of the air nozzles 25A to 25J in Fig. 4 employs a swingable head so as to blow air perpendicularly to the conveying plane of a glass sheet. However, the present invention is not limited thereto. The nozzle may be of a type of fixed head.

The cooling air supplied to the upper air-supply box 100 in Fig. 6, is supplied to upper blowing members 24A, 24B, ··· disposed above the rollers 22A, 22B, ··· shown in Fig. 4 via three flexible ducts 108 in Fig. 6, and blown from air nozzles 25A, 25B, ··· of the upper blowing members 24A, 24B, ··· towards the roller conveyer 22. Meanwhile, cooling air supplied to the lower air-supply box 102 is supplied to lower blowing members 26A, 26B, ··· provided under the rollers 22A, 22B, ··· via three flexible ducts 110, and blown from air nozzles 27A, 27B, ··· of lower blowing members 26A, 26B, ··· towards the roller conveyor 22. Accordingly, the cooling air is blown to the top and bottom surfaces of a glass sheet 18 conveyed by the roller conveyor 22, whereby the glass sheet 18 is cooled.

Further, the upper blowing members 24A, 24B, ··· and the lower blowing members 26A, 26B, ··· are movable up and down. And the upper blowing members 24A, 24B, ··· and the lower blowing members 26A, 26B, ··· are moved up and down together with the rollers 22A, 22B, ··· respectively. The rollers 22A, 22B, ··· are moved up and down according to conveyance of a glass sheet 18. Here, among the rollers 22A, 22B, ···, rollers in a position where a glass sheet 18 is conveyed, move up and down so that a conveying plane defined by the plurality of rollers in the position becomes a curved plane in the conveying direction of glass sheets, which corresponds to the curved shape of the bent glass sheet. Then, in accordance with the conveyance of the glass sheet, the rollers are sequentially moved up and down so that the curved plane defined by the rollers proceed in the conveying direction of glass sheets.

Next, a mechanism for vertically moving the upper blowing members 24A, 24B, ··· and the lower blowing members 26A, 26B, ··· will be described. Here, since the mechanisms for all of the blowing members are the same, only the structure of the vertically movable mechanism of the upper blowing member 24A will be described. With respect to the structures of other upper blowing members 24B, 24C, ··· and the lower blowing members 26A, 26B, ···, the same numeric symbols are applied, and description of these members will be omitted.

### Vertically movable mechanism.

On both sides of the upper blowing member 24A shown in Fig. 6, frames 112, 112 are fixed, and these frames 112, 112 are attached to guide frames 114, 114 via sliders 116, 116, and supported so as to be vertically movable along the guide frames 114, 114. The guide frames 114 are provided at the lower portion of a supporting member 118 for supporting the upper air-supply box 100 so as to be extended vertically therefrom.

Further, racks 120, 120 are vertically attached to the frames 112, 112, and pinions 122, 122 are engaged with these racks 120, 120. The pinions 122, 122 are attached to a shaft 124, and the shaft 124 is supported by the supporting member 118 via bearings 126, 126, and the right end portion of the shaft 124 in Fig. 6 is connected to a rotational shaft of a servo motor 128. Therefore, when the shaft 124 is rotated by a servo motor 128, the rotation is transformed into a linear movement by the effect of the pinions 122 and the racks 120. Accordingly, the upper blowing member 24A is moved in the vertical direction. That is all about the structure of the vertically movable mechanism.

The vertically movable mechanism is provided for each of other upper blowing members 24B, 24C, ··· and the lower blowing members 26A, 26B, ···. And all of the servo motors 128, 128, ··· of these vertically movable mechanisms are controlled by the controller 11 in Fig. 1.

When a type of glass sheet 18 is input from an external input means, not shown, the controller 11 prepares up/down movement control data of the upper blowing members 24A, 24B, 24C, ··· and the lower blowing members 26A, 26B, ···, which correspond the curvature of the glass sheet 18 of the type. Then, the controller controls the servo motors 128, 128 ··· based on the up/down movement control data prepared. Namely, the controller 11 moves up and down the upper blowing members 24A, 24B, ··· and the lower blowing members 26A, 26B, ··· opposing to the upper blowing members 24A, 24B, ··· in accordance with the vertical position of the rollers 22A, 22B, ··· maintaining constantly the distance between the upper blowing members 24A, 24B, ··· and the lower blowing members 26A, 26B, ···. Accordingly, the distance between the top surface of the glass sheet 18 and the upper blowing members 24A, 24B, ··· and the distance between the bottom surface of the glass sheet 18 and the lower blowing members 26A, 26B, ··· are controlled to be constant.

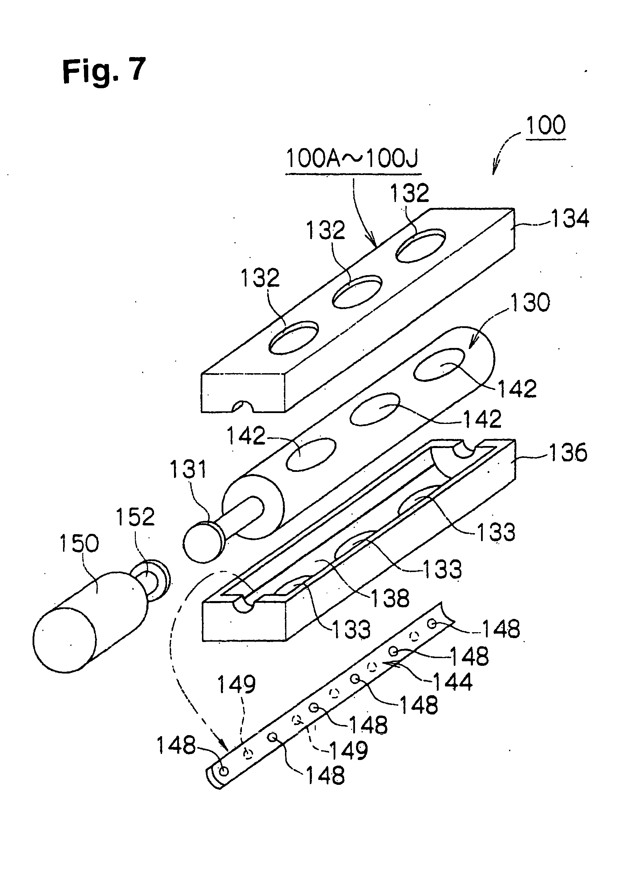

Here, the divided air-supply boxes 100A to 100J shown in the upper side in Fig. 1, are provided with dampers 130 shown in Fig. 7. Ten divided air-supply boxes in the lower side, not shown in Fig. 1, are also provided with the same dampers 130.

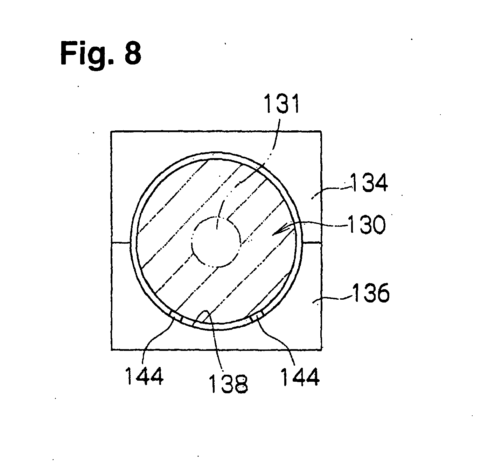

Each of the divided air-supply boxes 100A to 100J shown in Fig. 7, comprises an upper casing 134 made of e.g. SUS formed to have three openings 132 to be connected to a blower side, and a lower casing 136 made of e.g. SUS formed to have three openings 133 to be connected to three flexible ducts 108 shown in Fig. 6, and is constituted by combining them so that three openings 132 of the upper casing 134 and three openings 133 of the lower casing 136 are in line with each other in the vertical direction. Further, on each of mating faces of the upper casing 134 and the lower casing 136, a channel 138 having an arcuate cross section as shown in Fig. 8 is formed, and a damper 130 is disposed in a space having a circular cross section formed by these channels 138, 138.

The damper 130 made of a metal of e.g. SUS is formed into a cylindrical shape, and three perforated holes 142 are formed in the longitudinal direction. The damper 130 is disposed in the position in which its three perforated holes 142 are in line with three openings 132 of the upper casing 134. Further, the damper 130 is rotatably supported in the lower casing 136 via a pair of slide bearings 144, 144 shown in Fig. 8 each made of metal and formed into a long plate shape. Air channels are provided in the air-supply box when the perforated holes 142 and the openings 132 in the upper and lower side are in line with one another, whereby cooling air is supplied from the air supply source 200 to the blowing members.

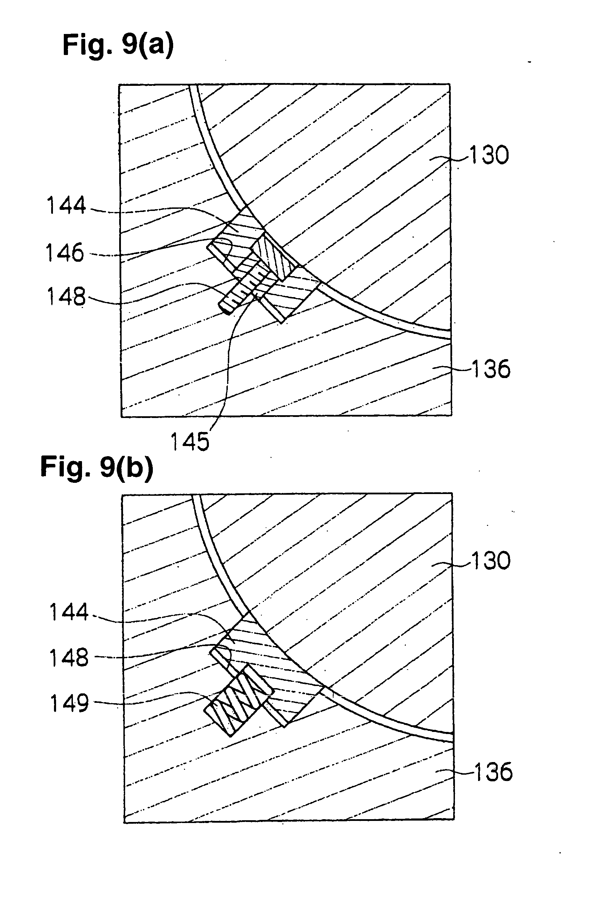

Further, each of the slide bearings 144 is inserted into a channel 146 formed in the lower casing 136 as shown in Figs. 9(a) and 9(b). Further, for the slide bearing 144, flush bolts 148 and springs 149 are alternately provided along the longitudinal direction. The slide bearing 144 is fixed to the lower casing 136 by tightening the flush bolts 148, 148, ··· to the lower casing 136, and is pushed against the damper 130 by a force of the springs 149. A cooler 145 determines the height of the flush bolt 148, and allows the slide bearing 144 to have a predetermined stroke. The damper 130 is stably supported in the central position of the spacing having a circular cross section by this tension.

To a shaft 131 formed at the end of the damper 130 shown in Fig. 7, an output shaft 152 of a motor 150 is connected via a reduction mechanism, not shown. Thus, when a rotational force of the motor 150 is transmitted to the damper 130, the damper 130 is rotated in the space 140.

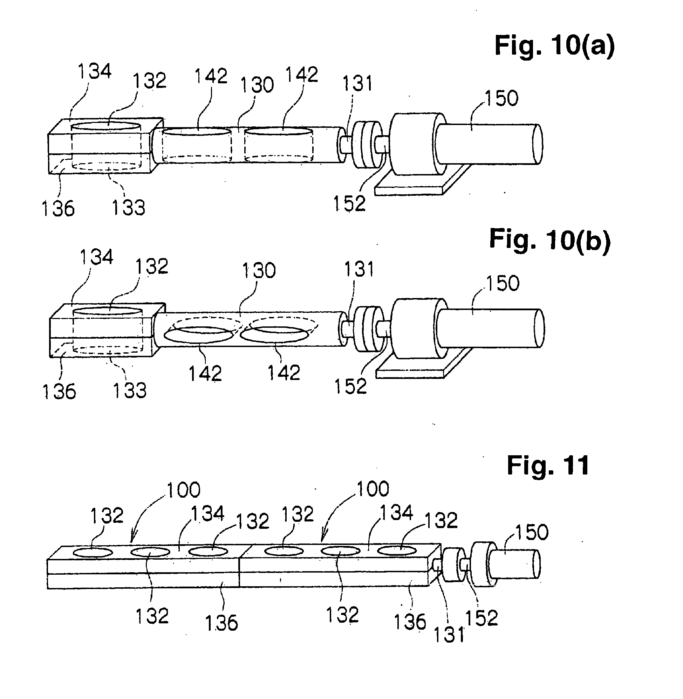

Further, the rotation of the damper 130 is controlled by the controller 11 shown in Fig. 1 so as to turn every 90° with respect to the reference position where the perforated holes 142 of the damper 130 and the openings 132 of the upper casing 134 and the openings 133 of the lower casing are in line. Therefore, the damper 130 is driven intermittently between an open position as shown in Fig. 10(a) in which the perforated holes 142 of the damper 130 and the openings 132 and 133 are in line, and a close position as shown in Fig. 10(b) in which the perforated holes 142 are shifted by 90° from the openings 132 and 133. By this open/close operation, supply/stop of cool-air to the upper blowing members 24A to 24J and the lower blowing members 26A to 26J as shown in Fig. 1 are performed.

Fig. 11 shows another embodiment of a divided air-supply box 101 for blowing cooling air upwardly from below the glass sheet 18 towards the glass sheet 18. The divided air supply box 101 is constituted as a single unit by connecting divided air-supply boxes 100 in Fig. 7 each having three openings 132 and three openings 133, together in the longitudinal direction and by connecting dampers, not shown, provided in each of them via an Oldham's coupling. By employing the divided air-supply box 101, the number of openings is increased from three to six, whereby it is possible to make the upward air flow larger than the downward air flow.

Next, the control method for the dampers 130, 130, ··· is described with reference to diagrams of blow/stop operations of air nozzles 25A to 25J and 27A to 27J shown in Figs. 12 to 16. Here, nozzles for blowing cooling air are each indicated by a white box, and nozzles in a stopped state are each indicated by a black square. Further, in order to illustrate blow/stop operations of the nozzles in a easy way to understand, a conveying path constituted by a roller conveyer 20 for bending and a roller conveyer 22 for air-cooling and tempering are illustrated in a straight shape. Further, since the dampers 130 are not provided in air nozzles 25K to 25T and 27K to 27T, cooling air is continuously blown from the air nozzles 25K to 25T and 27K to 27T. Here, in the initial state, air blown from all of the air nozzles in the cooling area is stopped.

Fig. 12 shows a state that two advanced glass sheets 18A and 18B are being air-cooled and tempered as they are continuously conveyed by a roller conveyer for air-cooling and tempering, and a third glass sheet 18C has been conveyed to the entrance of an air-cooling/tempering apparatus 16. Further in this production apparatus 10, since the conveying speed is high in a forming zone 14, the glass sheets 18 are continuously conveyed into the air-cooling/tempering apparatus 16 with reduced intervals between the glass sheets.

The first advanced glass sheet 18A is continuously conveyed as it is cooled and tempered by cooling air blown continuously from the air nozzles 25M to 25T and 27M to 27T. Meanwhile, the second advanced glass sheet 18B is passed a cooling-air blowing area from the air nozzles 25A to 25J and 27A to 27J which are subjected to blow/stop operations by dampers 130, and therefore, the controller 11 (refer to Fig. 1) controls to open the dampers 130, 130, ··· for the air nozzles 25C to 25J and 27C to 27J capable of blowing cooling air to the cooling-air blowing area where the glass sheet 18B is located. Accordingly, the glass sheet 18B is continuously conveyed as the whole of it is cooled and tempered by cooling air blown from the air nozzles 25C to 25J and 27C to 27J. Here, the controller 11 is controlling to close the dampers 130, 130, ··· of the air nozzles 25A, 25B, 27A and 27B in the cooling-air blowing area where the glass sheet 18B has already passed. This operation is to prepare for the third glass sheet 18C entering into the air-cooling/tempering apparatus 16.

Fig. 13 illustrates a state that the first glass sheet 18 is being transferred from the air-cooling/tempering apparatus 16, and the second glass sheet 18B is still being air-cooled and tempered as it is continuously conveyed. As illustrated in the figure, after the glass sheet 18B as the last glass sheet in the cooling area (if there is only one glass sheet in the cooling area, it is that glass sheet) is passed, the blowing operation of cooling air from the upper and lower blowing members behind the glass sheet 18B is sequentially stopped, so as to follow the movement of the glass sheet 18B being conveyed. Further, the figure shows a state that the leading edge in the conveying direction of a third glass sheet 18C is brought into the air-cooling/tempering apparatus 16 by the roller conveyor 22 for air-cooling and tempering.

Since the second glass sheet 18B has already passed the cooling-air blowing area of the air nozzles 25A to 25J and 27A to 27J which are subjected to blow/stop operations by a damper 130, the controller 11 (refer to Fig. 1) controls to open the dampers 130, 130, ··· for the air nozzles 25F to 25J and 27F to 27J capable of blowing cooling-air to a cooling-air blowing area in which the glass sheet 18B is located. Accordingly, the whole of the glass sheet 18B is cooled and tempered by cooling air blown from the air nozzles 25F to 25J and 27F to 27J and the air nozzles 25K to 25M and 27K to 27M as the glass sheet 18B is continuously conveyed. Here, the controller 11 controls to close the dampers 130, 130, ··· for the air nozzles 25A to 25E and 27A to 27E in a cooling-air blowing area in which the glass sheet 18B has already passed since the whole of the third glass sheet 18C has not entered into the cool-air tempering apparatus 16 yet.

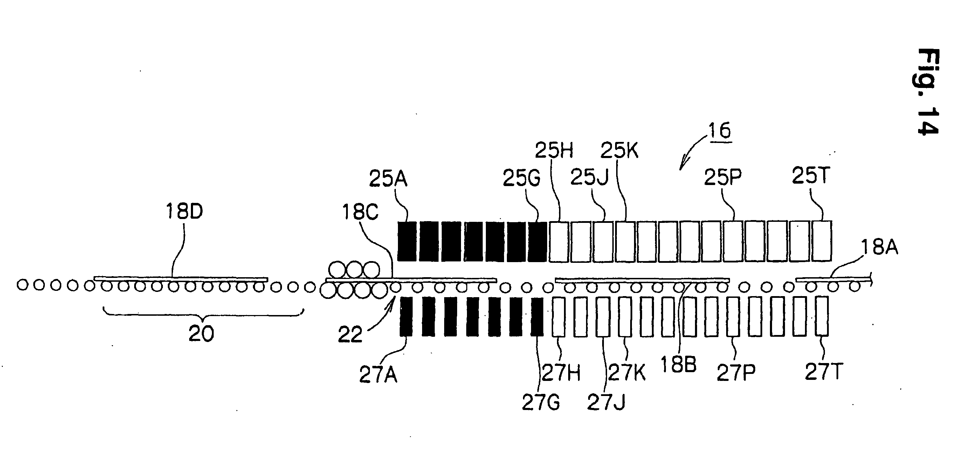

Fig. 14 shows a state just before the first glass sheet 18A is transferred from the air-cooling/tempering apparatus 16, and a state that the second glass sheet 18B is continuously cooled and tempered as it is continuously conveyed. Further, the figure shows a state that about a half of the third glass sheet 18C has entered in the air-cooling/tempering apparatus 16.

Since the second glass sheet 18B is passing the air-cooling blowing area of the air nozzles 25A to 25J and 27A to 27J which are subjected to blow/stop operations by a damper 130, the controller 11 (refer to Fig. 1) controls to open the dampers 130, 130, ··· for the air nozzles 25H to 25J and 27H to 27J capable of blowing cooling-air to the cooling-air blowing area in which the glass sheet 18B is located. Accordingly, substantially the whole of the glass sheet 18B is cooled and tempered by cooling air blown from the air nozzles 25H to 25J, 27H to 27J and air nozzles 25K to 25P and 27K to 27P, as the glass sheet 18B is continuously conveyed. Air blow does not have to be started after the glass sheet 18C is completely entered in the cooling area, but the blowing may be started in a state that the glass sheet 18C still protrudes from the cooling area by about the width of the air nozzle 25A or 27A.

Here, the controller 11 controls to close the dampers 130, 130, ··· for air nozzles 25A to 25G and 27A to 27G in the cooling-air blowing area in which the glass sheet 18B has already passed. This operation is because the whole of the third glass sheet 18C has not entered in the air-cooling/tempering apparatus 16 yet.

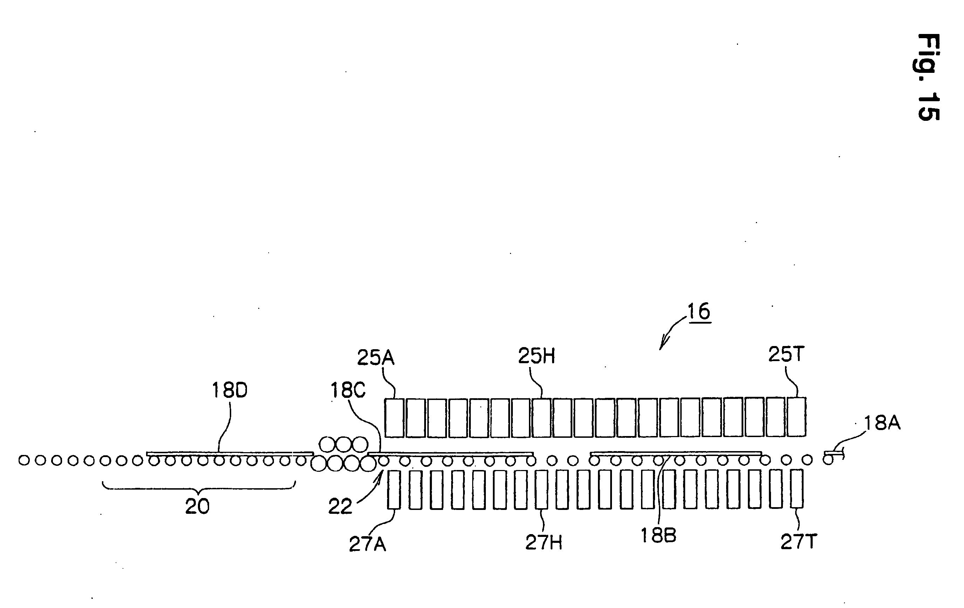

Fig. 15 shows a state that the first glass sheet 18A has completely transferred from the air-cooling/tempering apparatus 16, and a state that the second glass sheet 18B is being continuously cooled and tempered as it is continuously conveyed. Further, a state that the substantially whole of the third glass sheet 18C has entered in the air-cooling/tempering apparatus 16. At this moment, the controller 11 (refer to Fig. 1) controls to open the dampers 130, 130, ··· for the air nozzles 25A to 25J and 27A to 27J. Accordingly, the substantially whole of the third glass sheet 18C is cooled and tempered by cooling-air blown from air nozzles 25A to 25H and 27A to 27H, as it is continuously conveyed.

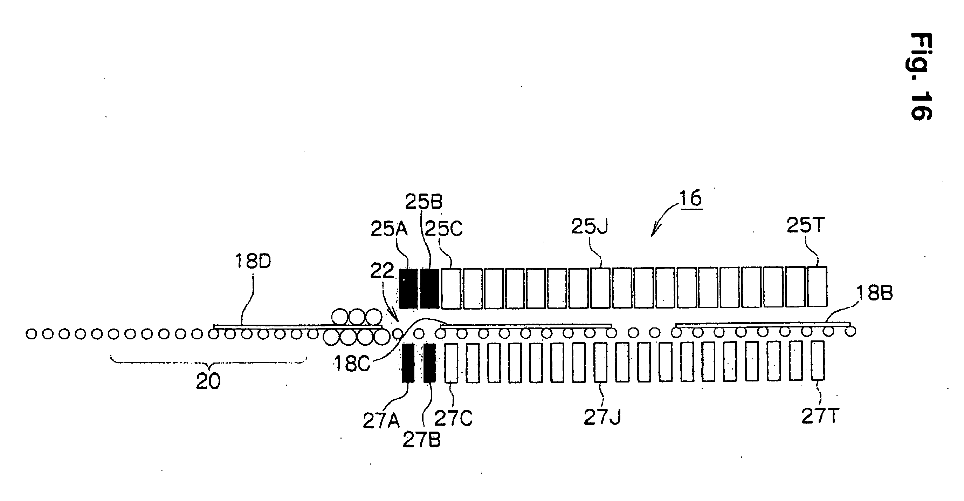

Fig. 16 shows a state that the second glass sheet 18B is being transferred from the air-cooling/tempering apparatus 16, and a state that the third glass sheet 18C is continuously cooled and tempered as it is continuously conveyed. Further, the figure shows a state that a fourth glass sheet 18D has conveyed to the entrance of the air-cooling/tempering apparatus 16 by a roller conveyer 20 for bending.

Since the third glass sheet 18C has already passed the cooling-air blowing area of the air nozzles 25A to 25J and 27A to 27J which are subjected to blow/stop operations by a damper 130, the controller 11 (refer to Fig. 1) controls to open the dampers 130, 130, ··· for the air nozzles 25C to 25J and 27C to 27J capable of blowing cooling air to the cooling air blowing area in which the glass sheet 18C is located. Accordingly, the whole of the glass sheet 18C is cooled and tempered by cooling-air blown from the air nozzles 25C to 25J and 27C to 27J, as the glass sheet 18C is continuously conveyed. Here, the controller 11 controls to close the dampers 130, 130, ··· for the air nozzles 25A, 25B, 27A and 27B in the cooling-air blowing area in which the glass sheet 18C has already passed. This operation is done since the whole of the fourth glass sheet 18D has not entered the air-cooling/tempering apparatus 16 yet.

As described above, according to the air-cooling/tempering apparatus 16 of this embodiment, as illustrated in Fig. 15, a controller 11 controls a plurality of dampers 130 for a plurality of air nozzles 25A to 25J and 27A to 27J capable of blowing cooling air to a cooling-air blowing area, so that cooling-air is blown all at once to the glass sheet 18 from the plurality of air nozzles 25A to 25J and 27A to 27J.

And as illustrated in Figs. 12 to 14, the controller 11 controls the plurality of dampers 130 so as to sequentially stop the blow of cooling air from the plurality of air nozzles 25A to 25J and 27A to 27J at a position corresponding to the position in which the glass sheet 18 has already passed, so as to follow the movement of the glass sheet 18 conveyed by the roller conveyor 22 for air-cooling and tempering. Accordingly, the glass sheet 18 can be air-cooled and tempered as the glass sheet 18 is continuously conveyed without adversely affecting the quality of the glass sheet 18.

Here, description has been made with respect to an air-cooling/tempering apparatus for a bent glass sheet in the embodiment. However, the present invention is not limited thereto but can be applied to an air-cooling/tempering apparatus for flat glass sheets.

As described above, an air-cooling/tempering apparatus for a glass sheet according to the present invention, employs rotation type dampers having an excellent durability, whereby blow/stop operations of cooling air can be controlled frequently blow/stop operations of cooling air can be controlled precisely according to the position of a glass sheet being conveyed, and a glass sheet can be cooled and tempered without stopping the conveyance. In the present invention in particular, since cooling air can be blown to the whole of the glass sheet entered in the cooling area, uneven cooling does not occur and a high quality glass sheet can thereby be produced.

Here, the present invention can be suitably applied to the production of a glass sheet for automobile use. It can also be applied for e.g. a window glass employed for ships, airplanes, trains or architectural structures.

## Claims

1. An apparatus for air-cooling and tempering a glass sheet, comprising:
a conveying means (20, 22, 28) installed to be operable from a forming zone (14) to a cooling area and to convey a glass sheet (18A, 18B, 18C, 18D) in a high temperature state, and along a conveying direction,
a plurality of upper blowing members (24A, 24B, 24C,...; 25A, 25B, 25C,...) provided in parallel along the conveying direction of glass sheet (18A, 18B, 18C, 18D) above the conveying means (20, 22, 28) in the cooling area,
a plurality of lower blowing members (26A, 26B, 26C,...; 27A, 27B, 27C,...) provided in parallel along the conveying direction of glass sheet (18A, 18B, 18C, 18D) under the conveying means (20, 22, 28) in the cooling area,
a plurality of air-supply boxes (100, 102) provided in each of the upper and lower blowing members for controlling blow/stop operations of cooling air from each of the blowing members, and
an air-supply source (200) connected to these air-supply boxes (100, 102),
**characterized in that**
each of the air-supply boxes (100, 102) comprises a cylindrical damper (130) having a perforated hole provided at its side, a casing (134, 136) for rotatably accommodating the damper (130) and for forming an air channel only when the damper (130) is at a predetermined rotational position, and a slide bearing (144) provided in a space between the damper (130) and the casing (134, 136), wherein the the air-supply-boxes (100, 102) are configured such that, by adjusting the rotational position of the damper (130), the cooling air supplied from the air-supply source (200) can be supplied to the upper and/or lower blowing members through said air channels.

2. The apparatus for air-cooling and tempering a glass sheet according to Claim 1, further comprising a control means for controlling the rotational position of the damper (130), the control means being adapted to:
(a) control the rotational positions of the dampers for all of the upper and lower blowing members in the cooling area to the positions to close the air channels so as to stop cooling air in the initial state,
(b) control the rotational positions of the dampers for all of the upper and lower blowing members to the positions to form the air channels so as to blow cooling air when the substantially whole of a conveyed glass sheet is entered in the cooling area, and
(c) control the rotational positions of the dampers for the upper and lower blowing members located behind the glass sheet to the positions to close the air channels in response to the conveyance position of the glass sheet so as to sequentially stop the cooling air blown from the upper and lower blowing members located behind the glass sheet in response to the conveyance position of the glass sheet after the last glass sheet in the cooling area is passed.

3. The apparatus for air-cooling and tempering a glass sheet according to Claim 1 or 2, wherein an upper and/or lower blowing member comprises an air-nozzle swingable in the conveying direction of glass sheet.

4. The apparatus for air-cooling and tempering a glass sheet according to Claims 1 to 3, wherein the conveying means (20, 22, 28) is a conveyer comprising a plurality of rollers disposed in parallel along the conveying direction of glass sheet.

5. The apparatus for air-cooling and tempering a glass sheet according to Claim 4, further comprising vertical drive means (48, 50, 56) for moving the rollers (20A, 20B...20M) up and down according to the position of a glass sheet so that a curved glass sheet can be conveyed.

6. The apparatus for air-cooling and tempering a glass sheet according to any one of Claims 1 to 5, wherein a plurality of dampers (130) are connected via an Oldham's coupling.

7. The apparatus for air-cooling and tempering a glass sheet according to any one of Claims 1 to 6, wherein the glass sheet is for a window glass of automobiles.

8. A process of air-cooling and tempering a glass sheet (18A, 18B, 18C, 18D) comprising the steps of:
conveying a glass sheet (18A, 18B, 18C, 18D) in a high temperature state from a forming zone (14) to a cooling area;
stopping cooling air from all of upper (24A, 24B, 24C,...; 25A, 25B, 25C,...) and lower blowing members (26A, 26B, 26C,...; 27A, 27B, 27C,...) in the cooling area in the initial state;
blowing the cooling air from all of the upper and lower blowing members when the substantially whole of a conveyed glass sheet is entered into the cooling area;
sequentially stopping the cooling air blown from the upper and lower blowing members located behind the glass sheet in response to the conveyance position of the glass sheet after the last glass sheet in the cooling area is passed;
**characterized by**
adjusting a rotational position of a cylindrical damper (130) so as to supply cooling air from an air-supply source (200) to the upper and/or lower blowing members through air channels formed when said damper (130) is at a predetermined rotational position.

9. The process for air-cooling and tempering a glass sheet according to Claim 8, wherein an upper and/or lower blowing member comprises an air-nozzle swingable in the conveying direction of glass sheet.

10. The process for air-cooling and tempering a glass sheet according to Claim 8 or 9, wherein the glass sheet is conveyed by means of conveying means (20, 22, 28) comprising a plurality of rollers disposed along the conveying direction.

11. The process for air-cooling and tempering a glass sheet according to Claim 10, wherein the rollers move up and down according to the position of the glass sheet so that a curved glass sheet can be conveyed.

12. A process according to any one of claims 8 to 11, wherein said glass sheet is a window glass of an automobile.

## Patentansprüche

1. Vorrichtung zum Luftkühlen und Tempern bzw. Vorspannen bzw. Härten einer Glasscheibe, umfassend:
Fördermittel (20, 22, 28), die installiert bzw. eingerichtet sind, um aus einer Formzone (14) zu einem Kühlbereich betätigbar bzw. betreibbar zu sein und um eine Glasscheibe (18A, 18B, 18C, 18D) in einem Hochtemperaturzustand und entlang einer Förderrichtung zu fördern,
eine Mehrzahl von oberen Blasgliedern (24A, 24B, 24C, ...; 25A, 25B, 25C, ...), die parallel entlang der Förderrichtung einer Glasscheibe (18A, 18B, 18C, 18D) über den Fördermitteln (20, 22, 28) in dem Kühlbereich zur Verfügung gestellt sind,
eine Mehrzahl von unteren Blasgliedern (26A, 26B, 26C, ...; 27A, 27B, 27C, ...), die parallel entlang der Förderrichtung einer Glasscheibe (18A, 18B, 18C, 18D) unter den Fördermitteln (20, 22, 28) in dem Kühlbereich zur Verfügung gestellt sind,
eine Mehrzahl von Luftzufuhrboxen bzw. -behältern (100, 102), die in jedem der oberen und unteren Blasglieder zur Verfügung gestellt sind, um Blas/Stoptätigkeiten bzw. -vorgänge von Kühlluft von jedem der Blasglieder zu steuern bzw. zu regeln, und
eine Luftzufuhrquelle (200), die mit diesen Luftzufuhrboxen (100, 102) verbunden ist, **dadurch gekennzeichnet, daß**
jede der Luftzufuhrboxen (100, 102) einen zylindrischen Dämpfer bzw. ein zylindrisches Dämpfungsglied (130), das ein perforiertes Loch aufweist, das an seiner Seite zur Verfügung gestellt ist, ein Gehäuse (134, 136) zum drehbaren Aufnehmen des Dämpfers (130) und zum Ausbilden eines Luftkanals, nur wenn der Dämpfer (130) an einer vorbestimmten Rotationsposition ist, und ein Gleitlager (144) umfaßt, das in einem Raum zwischen dem Dämpfer (130) und dem Gehäuse (134, 136) zur Verfügung gestellt ist, wobei die Luftzufuhrboxen (100, 102) derart konfiguriert bzw. ausgelegt sind, daß durch ein Einstellen der Rotationsposition des Dämpfers (130) die Kühlluft, die von der Luftzufuhrquelle (200) zugeführt ist, zu den oberen und/oder unteren Blasgliedern durch die Luftkanäle zugeführt werden kann.

2. Vorrichtung zum Luftkühlen und Vorspannen einer Glasscheibe nach Anspruch 1, weiterhin umfassend Steuer- bzw. Regelmittel zum Steuern bzw. Regeln der Rotationsposition des Dämpfers (130), wobei die Steuer- bzw. Regelmittel adaptiert sind, um:
(a) die Rotationspositionen der Dämpfer für alle oberen und unteren Blasglieder in dem Kühlbereich auf die Positionen nahe den Luftkanälen so zu regeln bzw. zu steuern, um die Kühlluft in dem Anfangszustand zu stoppen,
(b) die Rotationspositionen der Dämpfer für alle oberen und unteren Blasglieder auf die Positionen zu steuern bzw. zu regeln, um die Luftkanäle auszubilden, um die Kühlluft zu blasen, wenn im wesentlichen die Gesamtheit einer geförderten Glasscheibe in den Kühlbereich eingetreten ist, und
(c) die Rotationspositionen der Dämpfer für die oberen und unteren Blasglieder, die hinter der Glasscheibe angeordnet sind, auf die Positionen zu steuern bzw. zu regeln, um die Luftkanäle in Antwort auf die Förderposition der Glasscheibe zu schließen, um sequentiell die Kühlluft, die von den oberen und unteren Blasgliedern geblasen ist, die hinter der Glasscheibe angeordnet sind, in Antwort auf die Förderposition der Glasscheibe zu stoppen, nachdem die letzte Glasscheibe den Kühlbereich passiert hat.

3. Vorrichtung zum Luftkühlen und Vorspannen einer Glasscheibe nach Anspruch 1 oder 2, wobei ein oberes und/oder unteres Blasglied eine Luftdüse umfaßt, die in der Förderrichtung der Glasscheibe schwenk- bzw. schwingbar ist.

4. Vorrichtung zum Luftkühlen und Vorspannen einer Glasscheibe nach Anspruch 1 bis 3, wobei die Fördermittel (20, 22, 28) ein Förderer sind, der eine Mehrzahl von Walzen umfaßt, die parallel entlang der Förderrichtung der Glasscheibe angeordnet sind.

5. Vorrichtung zum Luftkühlen und Vorspannen einer Glasscheibe nach Anspruch 4, weiterhin umfassend vertikale Antriebsmittel (48, 50, 56) zum Bewegen der Walzen (20A, 20B ... 20M) nach oben und unten entsprechend der Position einer Glasscheibe, so daß eine gekrümmte Glasscheibe gefördert werden kann.

6. Vorrichtung zum Luftkühlen und Vorspannen einer Glasscheibe nach einem der Ansprüche 1 bis 5, wobei eine Mehrzahl von Dämpfern (130) über eine Oldham-Kupplung verbunden sind.

7. Vorrichtung zum Luftkühlen und Vorspannen einer Glasscheibe nach einem der Ansprüche 1 bis 6, wobei die Glasscheibe für ein Fensterglas von Autos ist.

8. Verfahren zum Luftkühlen und Vorspannen bzw. Tempern bzw. Härten einer Glasscheibe (18A, 18B, 18C, 18D), umfassend die Schritte:
Fördern einer Glasscheibe (18A, 18B, 18C, 18D) in einem Hochtemperaturzustand von einer Formzone (14) zu einem Kühlbereich;
Stoppen von Kühlluft von allen oberen (24A, 24B, 24C, ...; 25A, 25B, 25C, ...) und unteren Blasgliedern (26A, 26B, 26C, ...; 27A, 27B, 27C, ...) in dem Kühlbereich in dem Anfangszustand;
Blasen der Kühlluft von allen oberen und unteren Blasgliedern, wenn im wesentlichen die Gesamtheit einer geförderten Glasscheibe in den Kühlbereich eingetreten ist;
sequentielles Stoppen der Kühlluft, die von den oberen und unteren Blasgliedern geblasen wird, die hinter der Glasscheibe angeordnet sind, in Antwort auf die Förderposition der Glasscheibe, nachdem die letzte Glasscheibe den Kühlbereich passiert hat;
**gekennzeichnet durch**
ein Einstellen einer Rotationsposition eines zylindrischen Dämpfers (130), um Kühlluft von einer Luftzufuhrquelle (200) zu den oberen und/oder unteren Blasgliedern **durch** Luftkanäle zuzuführen, die ausgebildet sind bzw. werden, wenn sich der Dämpfer (130) an einer vorbestimmten Rotationsposition befindet.

9. Verfahren zum Luftkühlen und Vorspannen einer Glasscheibe nach Anspruch 8, wobei ein oberes und/oder unteres Blasglied eine Luftdüse umfaßt, die in der Förderrichtung einer Glasscheibe schwenk- bzw. schwingbar ist.

10. Verfahren zum Luftkühlen und Vorspannen einer Glasscheibe nach Anspruch 8 oder 9, wobei die Glasscheibe mittels Fördermittel (20, 22, 28) gefördert wird, die eine Mehrzahl von Walzen umfassen, die entlang der Förderrichtung angeordnet sind bzw. werden.

11. Verfahren zum Luftkühlen und Vorspannen einer Glasscheibe nach Anspruch 10, wobei sich die Walzen aufwärts und abwärts entsprechend der Position der Glasscheibe so bewegen, daß eine gekrümmte Glasscheibe gefördert werden kann.

12. Verfahren nach einem der Ansprüche 8 bis 11, wobei die Glasscheibe ein Fensterglas eines Autos ist.

## Revendications

1. Appareil pour refroidir par air et tremper une feuille de verre, comprenant :
un moyen de transport (20, 22, 28) installé pour pouvoir fonctionner d'une zone de formage (14) à une zone de refroidissement et pour transporter une feuille de verre (18A, 18B, 18C, 18D) dans un état de température élevée, et le long d'une direction de transport,
plusieurs éléments de soufflage supérieurs (24A, 24B, 24C, ... ; 25A, 25B, 25C, ...) prévus en parallèle le long de la direction de transport de la feuille de verre (18A, 18B, 18C, 18D), au-dessus du moyen de transport (20, 22, 28) dans la zone de refroidissement,
plusieurs éléments de soufflage inférieurs (26A, 26B, 26C, ... ; 27A, 27B, 27C, ...) prévus en parallèle le long de la direction de transport de la feuille de verre (18A, 18B, 18C, 18D), sous le moyen de transport (20, 22, 28) dans la zone de refroidissement,
plusieurs boîtes d'alimentation en air (100, 102) prévues dans chacun des éléments de soufflage supérieurs et inférieurs pour commander des opérations de soufflage/d'arrêt d'air de refroidissement provenant de chacun des éléments de soufflage, et
une source d'alimentation en air (200) reliée à ces boîtes d'alimentation en air (100, 102),
**caractérisé en ce que**
chacune des boîtes d'alimentation en air (100, 102) comprend un registre cylindrique (103) comportant un trou perforé prévu au niveau de son côté, un boîtier (134, 136) destiné à recevoir en rotation le registre (130) et à former un canal d'air uniquement lorsque le registre (130) est dans une position de rotation prédéterminée, et un palier lisse (144) prévu dans un espace situé entre le registre (130) et le boîtier (130, 136), les boîtes d'alimentation en air (100, 102) étant configurées pour que, par un réglage de la position de rotation du registre (130), l'air de refroidissement fourni par la source d'alimentation en air (200) puisse être délivré aux éléments de soufflage supérieurs et/ou inférieurs par l'intermédiaire desdits canaux d'air.

2. Appareil pour refroidir par air et tremper une feuille de verre selon la revendication 1, comprenant en outre un moyen de commande destiné à commander la position de rotation du registre (130), le moyen de commande étant adapté pour :
(a) commander les positions de rotation des registres pour l'ensemble des éléments de soufflage supérieurs et inférieurs de la zone de refroidissement jusqu'aux positions de fermeture des canaux d'air afin d'arrêter l'air de refroidissement dans l'état initial,
(b) commander les positions de rotation des registres pour l'ensemble des éléments de soufflage supérieurs et inférieurs jusqu'aux positions de formation des canaux d'air afin de souffler l'air de refroidissement lorsque sensiblement toute une feuille de verre transportée est introduite dans la zone de refroidissement, et
(c) commander les positions de rotation des registres pour les éléments de soufflage supérieurs et inférieurs situés derrière la feuille de verre jusqu'aux positions de fermeture des canaux d'air en réponse à la position de transport de la feuille de verre afin d'arrêter séquentiellement l'air de refroidissement soufflé par les éléments de soufflage supérieurs et inférieurs situés derrière la feuille de verre en réponse à la position de transport de la feuille de verre après le passage de la dernière feuille de verre dans la zone de refroidissement.

3. Appareil pour refroidir par air et tremper une feuille de verre selon la revendication 1 ou 2, dans lequel un élément de soufflage supérieur et/ou inférieur comprend une buse d'air pouvant osciller dans la direction de transport de la feuille de verre.

4. Appareil pour refroidir par air et tremper une feuille de verre selon les revendications 1 à 3, dans lequel le moyen de transport (20, 22, 28) est un dispositif de transport comprenant plusieurs rouleaux disposés en parallèle le long de la direction de transport de la feuille de verre.

5. Appareil pour refroidir par air et tremper une feuille de verre selon la revendication 4, comprenant en outre un moyen d'entraînement vertical (48, 50, 56) destiné à déplacer les rouleaux (20A, 20B... 20M) vers le haut et vers le bas en fonction de la position d'une feuille de verre afin qu'une feuille de verre incurvée puisse être transportée.

6. Appareil pour refroidir par air et tremper une feuille de verre selon l'une quelconque des revendications 1 à 5, dans lequel plusieurs registres (130) sont reliés par l'intermédiaire d'un accouplement Oldham.

7. Appareil pour refroidir par air et tremper une feuille de verre selon l'une quelconque des revendications 1 à 6, dans lequel la feuille de verre est en verre à vitre pour automobile.

8. Procédé pour refroidir par air et tremper une feuille de verre (18A, 18B, 18C, 18D), comprenant les étapes consistant à :
transporter une feuille de verre (18A, 18B, 18C, 18D) dans un état de température élevée d'une zone de formage (14) à une zone de refroidissement ;
arrêter l'air de refroidissement provenant d'un ensemble d'éléments de soufflage supérieurs (24A, 24B, 24C, ... ; 25A, 25B, 25C, ...) et inférieurs (26A, 26B, 26C, ... ; 27A, 27B, 27C, ...) dans la zone de refroidissement dans l'état initial ;
souffler l'air de refroidissement provenant de l'ensemble des éléments de soufflage supérieurs et inférieurs lorsque sensiblement la totalité d'une feuille de verre transportée est introduite dans la zone de refroidissement ;
arrêter séquentiellement l'air de refroidissement soufflé par les éléments de soufflage supérieurs et inférieurs situés derrière la feuille de verre en réponse à la position de transport de la feuille de verre après le passage de la dernière feuille de verre dans la zone de refroidissement ;
**caractérisé par** :
un réglage d'une position de rotation d'un registre cylindrique (130) afin de délivrer de l'air de refroidissement d'une source d'alimentation en air (200) aux éléments de soufflage supérieurs et/ou inférieurs par l'intermédiaire de canaux d'air formés lorsque ledit registre (130) est dans une position de rotation prédéterminée.

9. Procédé pour refroidir par air et tremper une feuille de verre selon la revendication 8, dans lequel un élément de soufflage supérieur et/ou inférieur comprend une buse d'air pouvant osciller dans la direction de transport de la feuille de verre.

10. Procédé pour refroidir par air et tremper une feuille de verre selon la revendication 8 ou 9, dans lequel la feuille de verre est transportée à l'aide d'un moyen de transport (20, 22, 28) comprenant plusieurs rouleaux disposés le long de la direction de transport.

11. Procédé pour refroidir par air et tremper une feuille de verre selon la revendication 10, dans lequel les rouleaux se déplacent vers le haut et vers le bas en fonction de la position de la feuille de verre afin qu'une feuille de verre incurvée puisse être transportée.

12. Procédé selon l'une quelconque des revendications 8 à 11, dans lequel ladite feuille de verre est en verre à vitre pour automobile.
